# EUROPEAN PATENT APPLICATION

(11) **EP 2 701 041 A1**
(43) Date of publication of application: **26.02.2014**
(21) Application number: 12181769.6
(22) Date of filing: 24.08.2012
(51) Int. Cl.: G06F 3/042, G06F 3/0354

(54) **Method and apparatus pertaining to detecting a light-emitting stylus' position**

(71) Applicant: BlackBerry Limited, Waterloo, ON N2K 0A7 (CA)
(72) Inventor: Mercea, Cornel, Waterloo, Ontario N2L 3W8 (CA); Gao, Yu, Waterloo, Ontario N2L 3W8 (CA); Singh, Amit Pal, Waterloo, Ontario N2L 3W8 (CA)
(74) Representative: Greenaway, Martin William

(57) **Abstract**

A display includes a light-transmissive planar member with side edges and opposing surfaces. A plurality of light sensors are disposed along at least two of the side edges of this planar member. These light sensors are disposed to detect light moving through the light-transmissive planar member by internally reflecting off the aforementioned opposing surfaces. A control circuit detects a position of a light-emitting stylus with respect to the display by using the plurality of light sensors to detect light from the light-emitting stylus that moves through the light-transmissive planar member via the aforementioned internal reflections. By one approach the side edges of the light-transmissive planar member are inclined at other than a perpendicular angle with respect to the aforementioned opposing surfaces.

## Description

### Field of Technology

The present disclosure relates to displays configured to receive input via a stylus.

### Background

Many electronic devices, including portable electronic devices, are configured to receive user input, at least in part, via a display. A touch-sensitive display, for example, provides a way for a user to tap or swipe the display surface with a finger in order to express selections, input information, and so forth.

Many devices are configured to work specifically with a hand-held stylus in these same regards (either in lieu of the foregoing or in combination therewith). Some displays, for example, include a plurality of light-emitting transmitter/receiver pairs disposed along the sides of the display. By determining where a stylus breaks one of the corresponding light beams the device can determine a present location of the stylus and utilize that location information accordingly.

Unfortunately, such an approach can consume considerable power to energize the light-emitting transmitters. This power consumption, in turn, can contribute to a reduced battery life for the portable electronic device. To avoid this particular problem it is known to employ only some of the transmitters at any one time (and thereby effectively scan in a sequential manner for the stylus tip). This solution, however, can lead to increased processing latency with respect to determining present stylus location and stylus movement. This latency, in turn, can lead to a lagging presentation of electronic ink, to an incomplete rendering of scribed objects, and so forth.

### Brief Description of the Drawings

FIG. 1 is a block diagram in accordance with the disclosure.

FIG. 2 is a perspective view in accordance with the disclosure.

FIG. 3 is a side-elevational schematic view in accordance with the disclosure.

FIG. 4 is a flow diagram in accordance with the disclosure.

FIG. 5 is a side-elevational schematic view in accordance with the disclosure.

### Detailed Description

The following describes an apparatus and method pertaining to a display having a light-transmissive planar member with side edges and opposing surfaces (such as top and bottom opposing surfaces). A plurality of light sensors are disposed along at least two of the side edges of the light-transmissive planar member. These light sensors are disposed to detect light moving through the light-transmissive planar member by internally reflecting off the aforementioned opposing surfaces. A control circuit serves to detect a position of a light-emitting stylus with respect to the display by using this plurality of light sensors to detect light from the light-emitting stylus that moves through the light-transmissive planar member via the aforementioned internal reflections.

By one approach the at least two side edges having the plurality of light sensors are disposed at least substantially orthogonal to one another. If desired, the light-transmissive planar member can comprise a substantially rectangular component having four side edges. In such a case, and by one approach, each of the four side edges can be configured with a plurality of such light sensors.

By one approach the side edges of the light-transmissive planar member are inclined at other than a perpendicular angle with respect to the aforementioned opposing surfaces. Such a configuration can be particularly useful to avoid interference owing to internal reflections of a light beam from an opposing side edge of the light-transmissive planar member.

So configured, the position of a stylus can be readily detected and utilized without requiring the display device to itself emit any light to effect such detection. As a result these teachings permit reliable stylus-position detection in a highly energy-effective manner. These savings, in turn, permit the use of all of the light sensors essentially all the time if desired which can reduce latency problems.

These teachings are highly flexible in practice and will accommodate, for example, a variety of display form factors and display screens comprised of a variety of materials. These teachings are also quite scalable and will accommodate using displays having great variety with respect to size.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

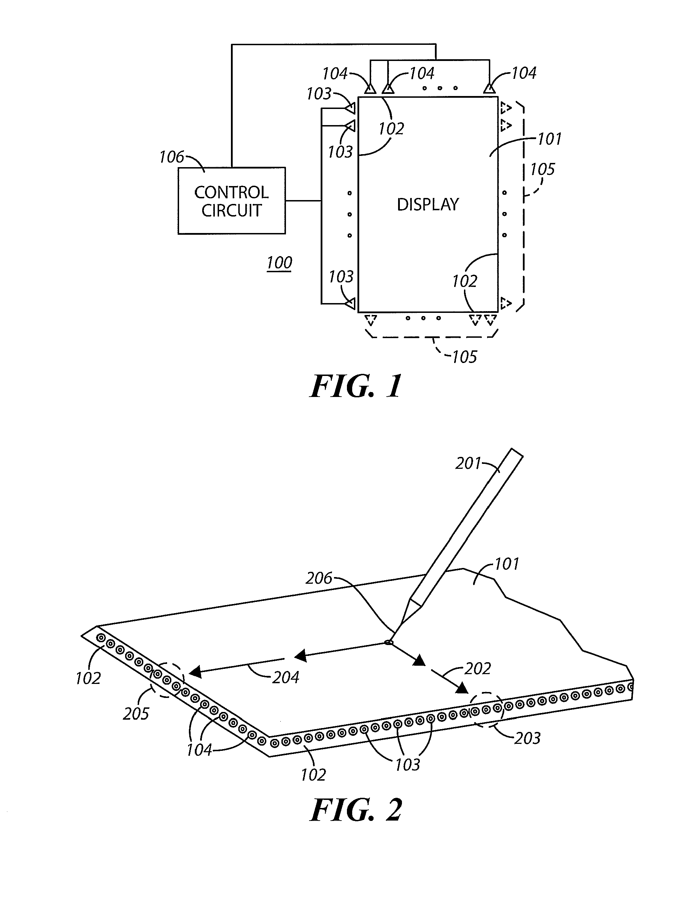

FIG. 1 presents an illustrative example of an apparatus 100 that comports at least in part with these teachings. This apparatus 100 (which may comprise an electronic device such as but not limited to a portable electronic device such as a so-called smartphone, tablet-styled computer, and so forth) includes at least one display 101. This display 101 can be configured to work only in conjunction with a corresponding stylus if desired. Generally speaking, a stylus is typically a hand-held writing utensil that often (but not exclusively) has a pencil-like elongated form factor and that includes at least one pointed end configured to interact with a drawing/writing surface. Using a stylus as an input mechanism with a display offers a variety of advantages over a fingertip including the opportunity for increased precision as well as an expression modality that accords with the user's own past experience with a pencil or pen.

If desired, however, these teachings can also be applied with a display 101 that is also configured to detect a user's fingertip or object other than a stylus. There are various mechanisms and approaches in such regards that comprise a very well understood area of prior art endeavor. Accordingly no further elaboration will be offered here in these regards for the sake of brevity.

This display 101 comprises, at least in part, a light-transmissive planar member. This light-transmissive planar member can be comprised of any of a variety of materials as desired such as, but not limited to, glass and any of a variety of plastics. Generally speaking, this material should be highly transparent for most application settings rather than merely translucent.

This light-transmissive planar member has side edges 102 that form at least a position of the light-transmissive planar member's periphery. In this case the light-transmissive planar member has a rectangular shape and accordingly has four side edges 102. So configured, adjacent side edges 102 are disposed substantially perpendicular to one another. Though a useful form factor it will be understood that other shapes for the light-transmissive planar member may be useful to accommodate the specific needs of a given application setting.

The light-transmissive planar member also has two opposing surfaces; i.e., a top surface and a bottom surface. In a typical application setting it will suffice for these two opposing surfaces to be at least substantially parallel to one another. That said, there may be application settings where another orientation may be appropriate and the present teachings are not especially limited in these regards.

This apparatus 100 also includes a plurality of light sensors that are disposed along at least two of the side edges 102 of the light-transmissive planar member. By way of example and without intending any particular limitations in these regards, in the illustrated example a first plurality of light sensors 103 are disposed along a first side edge of the light-transmissive planar member and a second plurality of light sensors 104 are disposed along an adjacent side edge of the light-transmissive planar member. If desired, however, other light sensors can be disposed along either or both of the remaining side edges 102 as generally denoted by reference numeral 105.

The number of light sensors disposed along any particular side edge 102 of the light-transmissive planar member can vary with such things as the size of the side edge 102, the desired stylus-location resolution, and so forth. Generally speaking, any given side edge 102 will have at least ten such light sensors and likely considerably more.

By one approach these light sensors comprise light-sensitive active components such as but not limited to photosensitive transistors as are known in the art. Such components are small and can be densely aligned into a corresponding array as will be well understood by those skilled in the art. If desired, at least some of these light sensors can comprise infrared light sensors (either in addition to being visible-light sensors or to the exclusion of visible light). By one approach, the selected infrared light sensors are sensitive to infrared light at a frequency that is distinct from solar-radiated light. Such an approach can help to ensure viable stylus detection per these teachings even when using the apparatus 100 in direct or indirect sunlight.

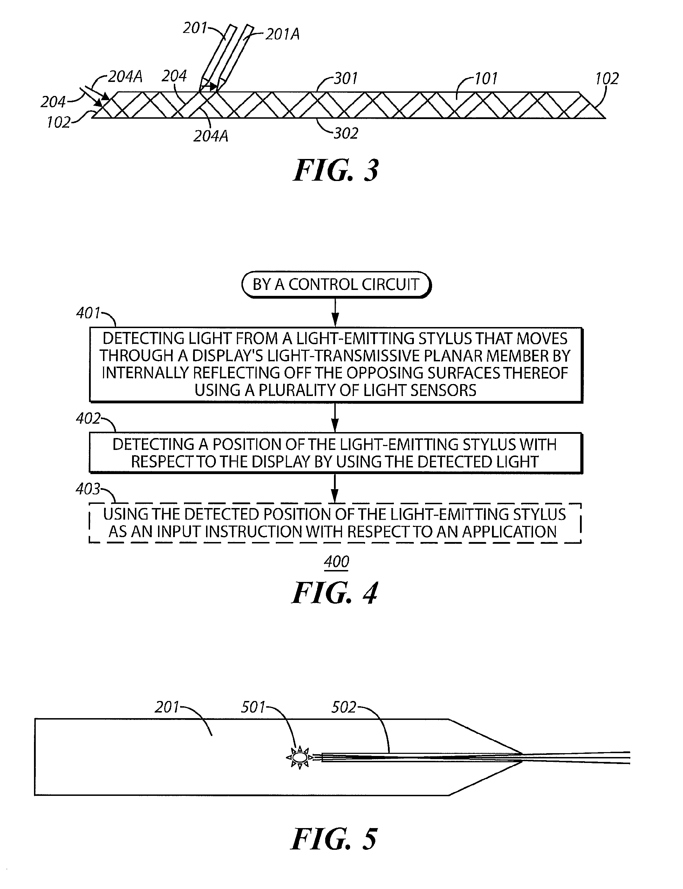

Referring momentarily to FIGS. 2 and 3, these teachings presume the use of a light-emitting stylus 201. More particularly, a light-emitting stylus 201 having at least one light-emitting diode at or within its tip disposed and configured to emit a corresponding beam 206 of light. This light-emitting stylus 201 can further comprise a processor or other circuitry of choice as well as a power source (including but not limited to one or more batteries or other portable power supplies (such as inductively-enabled power supplies) as desired. Such elements are common to and well understood in the art and require no further elaboration here.

Such a stylus 201 may emit this beam 206 constantly (either truly without interruption or as a periodic series of pulses) or only in response to certain user instructions (as when, for example, the user asserts a button (not shown) on the stylus 201 to switch the beam 206 on and off and/or to change the intensity of the beam 206).

Such a beam 206, upon entering the light-transmissive planar member of the display 101, will split into a number of beams (not all of which are shown in the figures for the sake of simplicity) including a first beam 202 that can be detected by one or more light sensors 203 along one side edge 102 of the light-transmissive planar member and a second beam 204 that can be detected by one or more light sensors 205 along another side edge 102 of the light-transmissive planar member.

It will be appreciated, however, that these beams 202 and 204 do not travel in a straight line through the light-transmissive planar member. Instead, as shown in FIG. 3 and with specific reference here to only one of the aforementioned beams 204, the beams will move through the light-transmissive planar member by internally reflecting back and forth off the opposing surfaces 301 and 302 of the light-transmissive planar member.

It will further be appreciated that each such beam (such as the particular beam 204 shown in FIG. 3) will typically have a counterpart beam that moves in the opposite direction through the light-transmissive planar member. Such an oppositely moving beam can in turn eventually reflect off a side edge 102 of the light-transmissive planar member and hence travel back towards the light sensors 205 that are detecting the beam 204 of interest.

Depending upon the light-detection approach being used, this reflected light may produce undesired interfering results. Accordingly, if desired, at least some of the side edges 102 of the light-transmissive planar member can be inclined at other than a perpendicular angle with respect to the aforementioned opposing surfaces 301 and 302. This can comprise, as one example in these regards, inclining the side edges 102 by about sixty degrees though various other angles of inclination can work suitably in a given application setting. So configured, the aforementioned reflection problem from an opposing side edge 102 can be largely or wholly obviated.

The foregoing light sensors are operably coupled to a control circuit 106 as shown in FIG 1. Such a control circuit 106 can comprise a fixed-purpose hard-wired platform or can comprise a partially or wholly programmable platform. These architectural options are well known and understood in the art and require no further description here.

By one approach this control circuit 106 can include (or can otherwise be coupled to) a memory. This memory can serve, for example, to non-transitorily store the computer instructions that, when executed by the control circuit 106, cause the control circuit 106 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

This control circuit 106 is configured (for example, by using corresponding programming as will be well understood by those skilled in the art) to carry out one or more of the steps, actions, and/or functions described herein. For example, this control circuit 106 can be configured to facilitate the process 400 shown in FIG. 4.

Referring both to FIGS. 4 and 3, the control circuit 106 uses the aforementioned light sensors to detect light 401 from the light-emitting stylus 201, which light moves through the display's 101 light-transmissive planar member by internally reflecting off the light-transmissive planar member's opposing surfaces 301 and 302. The control circuit 106 then uses this detected light to detect 402 a position of the light-emitting stylus 201 with respect to the display 101. As illustrated in FIG. 2, for example, the control circuit 106 can use detected-light information from the light sensors 203 and 205 to determine an X/Y coordinate for the present position of the stylus 201 with respect to the display 201.

The foregoing process 400 can be used repeatedly over time to track a present position of the stylus 201 as the stylus 201 moves. As illustrated in FIG. 3, for example, as the stylus 201 moves to a position denoted by reference numeral 201A, the corresponding resultant light beam 204 will also move as indicated by reference numeral 401A. To the extent such movement effects a change with respect to either the X or Y coordinates, the control circuit 106 can determine this change to maintain an understanding of the present position of the stylus 201.

As noted above, more than one light sensor 103/104 may detect a given light beam from the light-emitting stylus 201. This can occur, for example, because of the relative width of the light beam itself and/or the density of the light sensors themselves. Such a phenomena need not negatively impact tracking accuracy. Instead, each light sensor can provide information regarding the intensity of its detected light to the control circuit 106. The control circuit 106, in turn, can use that information to determine which of a given plurality of light sensors that are all receiving light is receiving the brightest light. The position of the light sensor that receives the brightest light, in turn, can be used to identify the center of the light beam and can be used as well to identify a particular position of the stylus 201 with respect to a particular coordinate-system axis.

So configured an electronic device can readily, efficiently, and reliably detect a present position of a light beam that corresponds to a present location of a light-emitting stylus with respect to a display. The foregoing certainly applies when the stylus tip physically contacts the aforementioned display 101. These teachings are also useful, however, to detect stylus location and movement even when the stylus is not in physical contact with the display 101 (for example, when the user holds the stylus somewhat above the display). Such an input modality can be useful depending upon the specifics of a given application setting.

Referring again to FIG. 1, with the foregoing location information the control circuit 106 can then take any number of responsive actions. As one optional and illustrative example in these regards the control circuit 106 can use 403 the detected position of the light-emitting stylus 201 as an input instruction with respect to a given active application.

The present disclosure may be embodied in other specific forms without departing from its essential characteristics. As one simple example in these regards, and referring to FIG. 5, the light-emitting stylus 201 can include a tunnel 502 to help to direct and/or collimate the beam from the light-emitting diode 501. In many application settings the functionality described herein will likely be enhanced by providing for a beam that comprises at least substantially parallel rays.

As another example in these regards, the aforementioned display 101 can be modified to also include light-emitting transmitters (such as, for example, a light-emitting diode placed at each corner of the display and aimed inwardly towards the display). In this case, the aforementioned side-mounted light sensors could also serve to detect and locate passive light occluders such as a user's finger.

And as yet another example in these regards, these teachings will readily accommodate using polarized light beams. Such an approach may be helpful in some application settings to, for example, avoid interference due to solar light.

The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a control circuit (106);
a display (101) operably coupled to the control circuit, wherein the display includes a light-transmissive planar member having side edges (102) and opposing surfaces (301 and 302);
a plurality of light sensors (103, 104, 105) disposed along at least two of the side edges of the light-transmissive planar member and configured to detect light moving through the light-transmissive planar member by internally reflecting off the opposing surfaces;
the control circuit configured to detect a position of a light-emitting stylus (201) with respect to the display by using the plurality of light sensors to detect light (202 and 204) from the light-emitting stylus that moves through the light-transmissive planar member by internally reflecting off the opposing surfaces.

2. The apparatus of claim 1 wherein the light-transmissive planar member comprises glass.

3. The apparatus of claim 1 wherein at least some of the side edges are inclined at other than a perpendicular angle with respect to the opposing surfaces.

4. The apparatus of claim 1 wherein the light-transmissive planar member comprises four of the side edges, and wherein adjacent ones of the side edges are disposed substantially perpendicular to one another.

5. The apparatus of claim 4 wherein the plurality of light sensors are disposed along all four of the side edges.

6. The apparatus of claim 5 wherein there are at least ten of the light sensors disposed along each of the side edges.

7. The apparatus of claim 1 wherein the plurality of light sensors are infrared light sensors.

8. The apparatus of claim 1 wherein the control circuit is configured to detect the position of a light-emitting stylus with respect to the display, at least in part, by using a plurality of the light sensors as are disposed along a single one of the side edges that are each detecting the light to determine which of the plurality of light sensors receives a brightest light.

9. A method comprising:
by a control circuit (106) that operably couples to a display (101) having a light-transmissive planar member having side edges (102) and opposing surfaces (301 and 302) and to a plurality of light sensors (103, 104, 105) disposed along at least two of the side edges of the light-transmissive planar member and configured to detect (401) light moving through the light-transmissive planar member by internally reflecting off the opposing surfaces:
detecting (402) a position of a light-emitting stylus (201) with respect to the display by using the plurality of light sensors to detect light from the light-emitting stylus that moves through the light-transmissive planar member by internally reflecting off the opposing surfaces.

10. The method of claim 9 wherein the light comprises infrared light.

11. The method of claim 10 wherein the light comprises only infrared light.

12. The method of claim 10 wherein the light comprises infrared light at a frequency that is distinct from solar-radiated light.

13. The method of claim 9 wherein detecting a position of a light-emitting stylus with respect to the display by using the plurality of light sensors to detect light from the light-emitting stylus comprises using a plurality of the light sensors as are disposed along a single one of the side edges that are each detecting the light to determine which of the plurality of light sensors receives a brightest light.

## Amended claims

### Amended claims in accordance with Rule 137(2) EPC.

**1.** An apparatus comprising:
a control circuit (106);
a display (101) operably coupled to the control circuit, wherein the display includes a light-transmissive planar member having side edges (102) and opposing surfaces (301 and 302);
a plurality of light sensors (103, 104, 105) disposed along at least two of the side edges of the light-transmissive planar member and configured to detect light moving through the light-transmissive planar member by internally reflecting off the opposing surfaces;
the control circuit configured to detect a position of a light-emitting stylus (201) with respect to the display by using the plurality of light sensors to detect light (202 and 204) from the light-emitting stylus that moves through the light-transmissive planar member by internally reflecting off the opposing surfaces.

**2.** The apparatus of claim 1 wherein the light-transmissive planar member comprises glass.

**3.** The apparatus of claim 1 wherein at least some of the side edges are inclined at other than a perpendicular angle with respect to the opposing surfaces.

**4.** The apparatus of claim 1 wherein the light-transmissive planar member comprises four of the side edges, and wherein adjacent ones of the side edges are disposed substantially perpendicular to one another.

**5.** The apparatus of claim 4 wherein the plurality of light sensors are disposed along all four of the side edges.

**6.** The apparatus of claim 5 wherein there are at least ten of the light sensors disposed along each of the side edges.

**7.** The apparatus of claim 1 wherein the plurality of light sensors are infrared light sensors.

**8.** The apparatus of claim 1 wherein the control circuit is configured to detect the position of a light-emitting stylus with respect to the display, at least in part, by using a plurality of the light sensors as are disposed along a single one of the side edges that are each detecting the light to determine which of the plurality of light sensors receives a brightest light.

**9.** A method comprising:
by a control circuit (106) that operably couples to a display (101) having a light-transmissive planar member having side edges (102) and opposing surfaces (301 and 302) and to a plurality of light sensors (103, 104, 105) disposed along at least two of the side edges of the light-transmissive planar member and configured to detect (401) light moving through the light-transmissive planar member by internally reflecting off the opposing surfaces:
detecting (402) a position of a light-emitting stylus (201) with respect to the display by using the plurality of light sensors to detect light from the light-emitting stylus that moves through the light-transmissive planar member by internally reflecting off the opposing surfaces.

**10.** The method of claim 9 wherein the light comprises infrared light.

**11.** The method of claim 10 wherein the light comprises only infrared light.

**12.** The method of claim 9 wherein detecting a position of a light-emitting stylus with respect to the display by using the plurality of light sensors to detect light from the light-emitting stylus comprises using a plurality of the light sensors as are disposed along a single one of the side edges that are each detecting the light to determine which of the plurality of light sensors receives a brightest light.
